# FASCICULE DE BREVET EUROPEEN

(11) **EP 2 448 750 B1**
(45) Date de publication et mention de la délivrance du brevet: **29.01.2014**
(21) Numéro de dépôt: 10745356.5
(22) Date de dépôt: 28.06.2010
(51) Int. Cl.: B29D 30/06

(54) **MOULE A SECTEURS A RECUL RADIAL**
SEKTORFORM MIT RADIALEM RÜCKGANG
SECTOR MOLD WITH RADIAL REGRESSION

(30) Priorité: 01.07.2009 FR 0954504
(43) Date de publication de la demande: 09.05.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: APERCE, Jean-Claude, F-63430 Pont-du-chateau (FR); JEANNOUTOT, Nicolas, F-63100 Clermont-Ferrand (FR); FERRAND, Jean-Charles, F-63200 Riom (FR)
(74) Mandataire: Noel, Luminita
(86) Numéro de dépôt international: PCT/FR2010/051341
(87) Numéro de publication internationale: WO 2011/001095

(56) Documents cités:
- FR-A2- 2 270 089
- US-A- 3 464 090
- US-A- 3 850 555
- US-A- 3 854 853
- US-A- 3 990 823
- US-A- 6 066 283
- US-A1- 2005 112 222

## Description

L'invention concerne le domaine des moules de vulcanisation de pneumatiques, plus particulièrement des moules de type à secteurs.

Un moule à secteurs comprend plusieurs pièces séparées qui, par rapprochement relatif, délimitent un espace de moulage quasi tordidal. En particulier, un moule à secteurs comporte deux coquilles latérales pour le moulage des flancs du pneumatique, et plusieurs secteurs périphériques situés entre les coquilles pour le moulage de la bande de roulement du pneumatique. Ces secteurs périphériques sont répartis circonférentiellement en bordure des coquilles.

Pour permettre l'ouverture du moule et faciliter l'insertion et/ou l'extraction du pneumatique dans le moule, celui-ci est généralement équipé de différents vérins agissant sur les différentes pièces composant le moule. En particulier, les deux coquilles, qui sont généralement disposées horizontalement, sont reliées à des actionneurs verticaux d'une presse et les différents secteurs du moule sont reliés à des actionneurs horizontaux de la presse.

Des moules pour la vulcanisation de pneumatiques, les moules comportant essentiellement un bâti, deux coquilles latérales décalées axialement l'une de l'autre et montées mobiles en translation axiale par rapport au bâti, une pluralité de secteurs répartis circonférentiellement en bordure des coquilles et disposés axialement entre les deux coquilles, les secteurs étant montés mobiles en translation radiale par rapport aux coquilles, des moyens de couplage des secteurs à l'une des deux coquilles dite coquille motrice, lesdits moyens de couplage étant agencés de sorte que le déplacement axial de la coquille motrice par rapport au bâti provoque un déplacement radiale des secteurs par rapport a la coquille motrice, son bien connus dans l'art antérieur.

Voir par exemple les documents US 2005/0112222 - A, US 6066283 - A, US 3854853 - A, US 3990823 - A, US 3850555 - A et US 3464090 - A.

Il apparaît donc que l'architecture globale du moule de vulcanisation de l'état de la technique est relativement complexe du fait de la présence de différents éléments dont les cinématiques sont chacune différentes. En outre, les déplacements des coquilles et des secteurs sont multidirectionnels et donc relativement complexes. L'invention a notamment pour but de proposer un moule de vulcanisation simplifié.

A cet effet, l'invention a pour objet un moule de vulcanisation pour pneumatique comme défini dans la revendication 1, le pneumatique ayant une forme générale torique, sensiblement symétrique autour d'un axe, caractérisé en ce qu'il comprend :
- un bâti,
- deux coquilles latérales décalées axialement l'une de l'autre et montées mobiles en translation axiale par rapport au bâti,
- une pluralité de secteurs répartis circonférentiellement en bordure des coquilles et disposés axialement entre les deux coquilles, les secteurs étant montés mobiles en translation radiale par rapport aux coquilles,
- des moyens de couplage des secteurs à l'une des deux coquilles dite coquille motrice, comprenant un levier, des moyens de liaison du levier au secteur comprenant une liaison pivot d'axe orthogonal aux directions axiales et radiales définies par le moule, des moyens de liaison du levier à la coquille motrice comprenant une liaison pivot d'axe orthogonal aux directions axiales et radiales définies par le moule,
- des moyens de guidage de l'axe des moyens de liaison du secteur à la coquille motrice,
les moyens de couplage et les moyens de guidage étant agencés de sorte que le déplacement axial de la coquille motrice par rapport au bâti provoque un déplacement de l'axe des moyens de liaison du levier au secteur sensiblement uniquement radial par rapport à la coquille motrice. Des formes préferentielles de l'invention sont définies dans les revendications dépendantes.

Le déplacement de l'axe des moyens de liaison du levier au secteur est sensiblement uniquement radial indépendamment du fait que le levier soit ou non relié effectivement au secteur. Le déplacement du secteur par rapport à la coquille ne guide pas axialement le déplacement de l'axe des moyens de liaison du levier au secteur par rapport à la coquille. En effet, la trajectoire uniquement radiale de l'axe des moyens de liaison du levier au secteur est imposée par les moyens de couplage et les moyens de guidage.

Ainsi, le déplacement libre de l'axe des moyens de liaison du levier au secteur est sensiblement uniquement libre. Le mouvement libre de cet axe correspond au mouvement qu'aurait cet axe s'il n'était pas relié au secteur.

Les moyens de guidage imposent ou guident l'axe des moyens de liaison du levier à la coquille de façon à imposer un déplacement à l'axe des moyens de liaison du levier au secteur. Les axes des moyens de liaison sont agencés de sorte que le déplacement imposé à l'axe des moyens de liaison du levier au secteur par les moyens de guidage de l'axe des moyens de liaison du levier à la coquille est sensiblement uniquement radial.

En d'autres termes, le mouvement de l'axe de liaison du levier au secteur par rapport à la coquille motrice a une composante axiale sensiblement nulle. Il en résulte que la force motrice de déplacement du secteur par rapport à la coquille motrice et appliquée au secteur par l'intermédiaire des premiers moyens de liaison est parallèle à la direction radiale et orientée radialement vers l'extérieur du moule. Ainsi, on peut supprimer les efforts axiaux générateurs de frottements ou de mouvements parasites et permet de réduire considérablement le module de la force exercée sur le secteur dés lors que cette force est dirigée uniquement dans la direction radiale.

Grâce à la présence des moyens de couplage des secteurs du moule à la coquille motrice, il est possible de se dispenser de l'utilisation de vérins dédiés spécifiquement à l'actionnement de chacun des secteurs du moule. En effet, dans le moule de l'invention, les moyens de déplacement de la coquille motrice agissent de manière indirecte sur chacun des secteurs par l'intermédiaire des moyens de couplage.

La coquille motrice est déplacée par ces moyens de déplacement selon une direction axiale, de manière à écarter les deux coquilles l'une de l'autre et ainsi à démouler les flancs du pneumatique. Simultanément au déplacement de la coquille motrice, les secteurs sont déplacés selon une direction radiale de manière à démouler la bande de roulement du pneumatique.

Enfin, l'utilisation d'un levier actionné par la coquille motrice permet de manière simple de déplacer les secteurs dans la direction voulue. Cette configuration présente l'avantage que l'effort exercé sur les secteurs est maximal lorsque le moule est fermé, c'est-à-dire lorsque le levier est dans une position sensiblement horizontale et donc que le bras de levier est maximal. Cela est particulièrement avantageux car c'est au début de l'ouverture du moule que l'effort radial exercé sur les secteurs doit être maximal pour démouler les sculptures de la bande de roulement.

Un moule selon l'invention peut en outre comprendre l'une ou plusieurs des caractéristiques suivantes.

La liaison pivot d'axe des moyens de liaison du levier au secteur relie un dos du secteur au levier.

La direction axiale est sensiblement verticale et la coquille motrice est la coquille inférieure. Dans ce cas, l'opération de démoulage du pneumatique comprend les étapes successives suivantes. Tout d'abord, des vérins agissent sur la coquille supérieure pour la déplacer vers le haut et ainsi ouvrir le moule. Puis, des vérins agissent sur la coquille inférieure, éventuellement par l'intermédiaire d'un plateau mobile formant support de la coquille, pour déplacer le pneumatique vers le haut et l'extraire du moule. Lors du déplacement de cette coquille, les moyens de couplage agissent sur les secteurs de manière à les écarter de la bande de roulement du pneumatique de sorte que le pneumatique n'est plus en contact avec les secteurs. Il est ainsi relativement aisé de venir extraire le pneumatique du moule.

Les moyens de couplage sont agencés de manière à induire entre la coquille motrice et chaque secteur, un mouvement dont la composante axiale est sensiblement nulle. En d'autres termes, ce mouvement est sensiblement radial. Le pneumatique comprend un ensemble de sculptures qui sont généralement sensiblement symétriques par rapport à un plan équatorial du pneumatique. Les efforts nécessaires à l'extraction de la sculpture du moule de la bande de roulement du pneumatique sont donc essentiellement dirigés selon une direction parallèle au plan équatorial de sorte qu'il est préférable que le démoulage des secteurs soit réalisé selon une direction parallèle au plan équatorial, c'est-à-dire selon une direction radiale du pneumatique. Aussi, étant donné que, lors du démoulage du pneumatique, celui-ci est en mouvement du fait qu'il est porté par la coquille motrice qui est déplacée axialement, il est important que le mouvement transmis aux secteurs soit radial par rapport au pneumatique et non pas par rapport au bâti du moule qui est fixe.

Les moyens de couplage comprennent des moyens de liaison du levier au bâti comprenant une liaison pivot d'axe orthogonal aux directions axiales et radiales définies par le moule. De préférence, les axes des moyens de liaison du levier au secteur, à la coquille motrice et au bâti sont sensiblement parallèles les uns aux autres et agencés sur le levier aux sommets d'un triangle.. Dans un mode de réalisation, l'axe des moyens de liaison du levier au bâti peut être fixe par rapport au bâti. Dans un autre mode de réalisation, cet axe peut également être mobile par rapport au bâti. Ainsi, par exemple, les moyens de liaison du levier au bâti comprennent une liaison pivot glissant d'axe monté glissant dans une glissière dont la direction de glissement est sensiblement axiale. De cette façon, on peut faire permettre de redescendre la coquille motrice sans provoquer de mouvement inverse, radialement interne, du secteur par rapport à la coquille motrice et permettre l'introduction d'une nouvelle ébauche de pneumatique lors du cycle suivant. De préférence, les moyens de liaison du levier au bâti comprennent une glissière de glissement et de guidage de l'axe des moyens de liaison du levier au bâti. Cette glissière permet de limiter la course de l'axe des moyens de liaison du levier au bâti lors des mouvements axiaux de la coquille motrice.

Dans un mode de réalisation, le triangle est rectangle et l'axe des moyens de liaison du levier à la coquille motrice passe par le sommet à angle droit du triangle rectangle.

Dans un mode de réalisation, les moyens de guidage comprennent une rampe de glissement de l'axe des moyens de liaison du levier à la coquille motrice portée par la coquille motrice. La rampe permet de guider le déplacement de l'axe des moyens de liaison du levier à la coquille.

Avantageusement, la rampe de glissement est sensiblement rectiligne. Dans le cas d'un triangle rectangle, la trajectoire du mouvement de l'axe des moyens de liaison du levier à la coquille est sensiblement rectiligne. La direction de glissement de l'axe des moyens de liaison du levier à la coquille forme alors avec la direction axiale de translation de la coquille motrice un angle égal à l'angle du sommet du triangle par lequel passe l'axe des moyens de liaison du levier au secteur.

Dans le cas d'un triangle non-rectangle, la trajectoire du mouvement de l'axe des moyens de liaison du levier à la coquille n'est pas rectiligne. Une rampe non rectiligne, plus complexe, doit alors être prévue pour guider le déplacement de l'axe des moyens de liaison du levier à la coquille tout en assurant un mouvement uniquement radial de l'axe des moyens de liaison du levier au secteur.

Dans un autre mode de réalisation, les moyens de guidage comprennent une glissière de glissement de l'axe des moyens de liaison du levier à coquille motrice ménagée dans la coquille motrice.

Dans encore un autre mode de réalisation, les moyens de guidage comprennent une biellette reliée respectivement au levier et à la coquille motrice par des liaisons pivots d'axes orthogonaux aux directions axiales et radiales définies par le moule.

L'invention sera mieux comprise à la lecture de la description qui va suivre, donnée uniquement à titre d'exemple, et faite en se référant aux dessins annexés dans lesquels :
- les figures 1 à 7 sont des schémas selon une coupe verticale axiale d'un moule selon l'invention au cours de différentes étapes successives du moulage d'un pneumatique,
- les figures 8 à 10 sont des schémas illustrant différentes formes du levier du moule de la figure 1 et les cinématiques respectives de ces leviers au cours d'une opération de moulage,
- la figure 11 est une vue de côté de la liaison entre la coquille motrice, le bâti et un secteur du moule représenté sur les figures 1 à 7,
- la figure 12 est un schéma identique à la figure 11 d'une variante de l'invention.

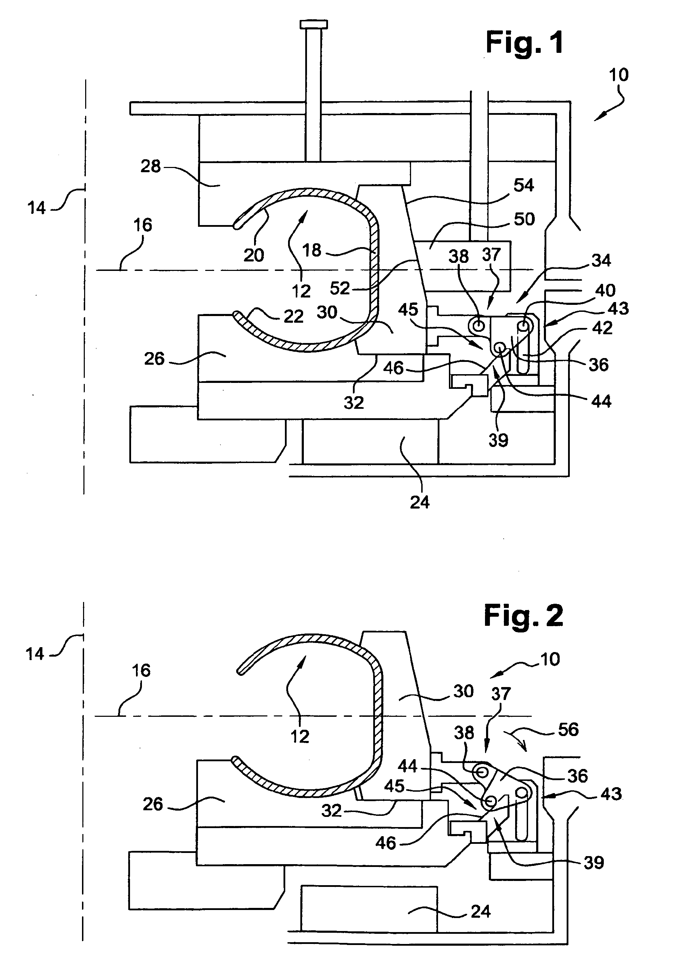

On a représenté sur la figure 1 un moule 10 de vulcanisation pour pneumatique 12.

En référence au pneumatique 12, on définit une direction axiale 14 sensiblement confondue avec l'axe de révolution du pneumatique. En référence à cet axe 14, on définit des directions radiales dont une direction radiale 16 est représentée sur la figure 1.

Ainsi, la figure 1 est un schéma selon une coupe axiale du moule 10, c'est-à-dire un schéma représenté dans le plan défini par les directions axiale 14 et radiale 16. Le pneumatique 12 comprend une bande de roulement 18 et deux flanc 20 et 22 disposés de part et d'autre de la bande de roulement.

Le moule 10 est agencé de telle façon que, lorsque le pneumatique est à l'intérieur du moule 10, la direction axiale 14 est sensiblement verticale et la direction radiale 16 est sensiblement horizontale.

Le moule 10 comprend :
- un bâti 24,
- deux coquilles latérales inférieure 26 et supérieure 28 décalées selon l'axe 14. l'une de l'autre, destinées à venir en contact respectivement avec les flancs 22 et 20. les coquilles étant éventuellement portées par des plateaux du moule de sorte que l'on peut changer les coquilles pour changer les marquages des flancs du pneumatique,
- une pluralité de secteurs 30 répartis circonférentiellement autour de l'axe 14 en bordure des coquilles 26 et 28 et disposés axialement entre les deux coquilles 26 et 28, les secteurs 30 étant destinés à venir en contact avec la bande de roulement 18 du pneumatique.

Etant donné que la figure 1 est une vue selon une coupe axiale, seul un secteur 30 est visible sur cette figure. Par la suite, on décrira l'invention en référence à ce secteur 30, étant entendu que l'invention est reproduite de manière identique sur chacun des secteurs.

Les deux coquilles latérales 26 et 28 sont montées mobiles selon une translation axiale verticale par rapport au bâti 24. A cet effet, des moyens de déplacement des coquilles de type classique sont utilisés, par exemple des vérins.

Le secteur 30 est monté mobile en translation radiale par rapport à la coquille inférieure 26. Pour cela, le secteur 30 et la coquille inférieure 26 comprennent des surfaces complémentaires planes du secteur 30 et de la coquille inférieure 26 en contact selon un plan 32 sensiblement horizontal. Le plan 32 forme une surface de frottement du secteur 30 sur la coquille inférieure 26 de sorte que la liaison entre ces deux éléments est de type appui plan, c'est-à-dire que le mouvement relatif de ces deux pièces est limité à une translation dans un plan horizontal, c'est-à-dire sensiblement orthogonal à la direction axiale 14.

Le moule 10 comprend en outre des moyens 34 de couplage du secteur 30 à la coquille inférieure 26 agencés de sorte qu'un déplacement axial de la coquille inférieure 26, également appelée coquille motrice, par rapport au bâti 24 provoque un déplacement radial du secteur 30 par rapport à la coquille inférieure 26.

Les moyens 34 de couplage comprennent un levier 36, également appelé guignol, de forme sensiblement triangulaire et contenu dans le plan radial défini par les axes 14 et 16.

Les moyens de couplage 34 comprennent des moyens 37 de liaison du levier 36 au secteur 30 comprenant une liaison pivot d'axe 38 orienté de manière orthoradiale, c'est-à-dire orthogonale à la direction axiale 14 et à la direction radiale 16. La liaison pivot d'axe 38 est du type pivot non glissant ou pivot simple.

Les moyens de couplage 34 comprennent des moyens 39 de liaison du levier 36 au bâti 24 comprenant une liaison de type pivot glissant d'axe 40 porté par le levier 36. Pour les raisons qui ont été explicitées plus haut, la forme de réalisation préférentielle illustrée à la figure 1 prévoit que l'axe 40 est monté glissant dans une glissière 42 du bâti 24 dont la direction de glissement est sensiblement axiale. En variante, cet axe peut être fixe par rapport au bâti 24.

Enfin, les moyens de couplage 34 comprennent des moyens 43 de liaison du levier 36 à la coquille inférieure 26 comprenant une liaison de type pivot d'axe 44 porté par le levier 36. La liaison pivot d'axe 44 est du type pivot mobile par rapport à la coquille 26.

Le moule 10 comprend également des moyens 45 de guidage de l'axe 44 comprenant une rampe 46 de glissement de l'axe 44. L'axe 44 est monté glissant sur la rampe 46, solidaire de la coquille inférieure 26. Les moyens de couplage 34 et la rampe 46 sont agencés de sorte que, le déplacement axial de la coquille inférieure 26 par rapport au bâti 24 provoque un déplacement de l'axe 38 sensiblement uniquement radial par rapport à la coquille 26.

Sur les figures 1 à 7, pour des raisons de clarté des dessins, seules la rampe 46 et la glissière 42 sont représentées par transparence à travers le levier 36.

La coquille supérieure 28 est sensiblement symétrique de la coquille inférieure 26 par rapport au plan équatorial du pneumatique, c'est-à-dire par rapport au plan normal à la direction 14 et comprenant la direction 16.

Le moule 10 comprend en outre une couronne de fermeture 50 mobile selon une direction axiale par rapport à la coquille supérieure 28 et comprenant une surface de glissement 52 inclinée et agencée pour venir glisser contre une surface externe 54 du secteur 30 de manière à exercer un effort radial orienté vers le centre du pneumatique sur le secteur 30 lorsque la couronne 50 se déplace vers le bas et glisse sur la surface 54.

Nous allons par la suite décrire les différentes étapes d'un procédé d'ouverture et de fermeture du moule 10, en référence aux figures 1 à 7.

Au cours d'une première étape représentée sur la figure 1, le moule 10 est fermé, c'est-à-dire que les coquilles 26 et 28 ainsi que les secteurs 30 sont en position fermée et entourent le pneumatique 12. C'est lorsque le moule 10 est dans cette configuration que la vulcanisation du pneumatique 12 peut avoir lieu.

Dans cette configuration, la coquille inférieure 26 est en appui inférieur contre une partie du bâti 24 et les secteurs 30 sont serrés vers l'axe 14 du pneumatique, notamment sous l'effet de la couronne 50 en appui contre la surface arrière 54 des secteurs 30.

Une fois que la vulcanisation a eu lieu, on procède à l'ouverture du moule, tout d'abord en déplaçant la coquille supérieure 28 vers le haut jusqu'à découvrir la partie supérieure du moule 10. On constate ainsi sur la figure 2 que la coquille supérieure 28 n'est plus visible.

Malgré l'absence de la coquille supérieure 28, le pneumatique 12 est toujours emprisonné entre les secteurs 30 et la coquille inférieure 26. Aussi, au cours d'une étape suivante, la coquille inférieure 26 est déplacée vers le haut par rapport au bâti 24, comme cela est visible sur la figure 2.

Au cours de ce déplacement, la rampe 46 agit sur le pivot mobile 44 de manière à faire pivoter le levier 36 autour de l'axe 40 dans la direction indiquée par la flèche 56.

Le pivotement autour de l'axe 40 du levier 36 par rapport au bâti 24 a pour effet que le levier 36 tire vers l'arrière le segment 30 par l'intermédiaire de la liaison 38. Ainsi, en tirant le secteur 30 vers l'arrière, celui-ci glisse le long de la surface 32 sur la coquille inférieure 26 et s'écarte progressivement de la bande de roulement 18 du pneumatique 12.

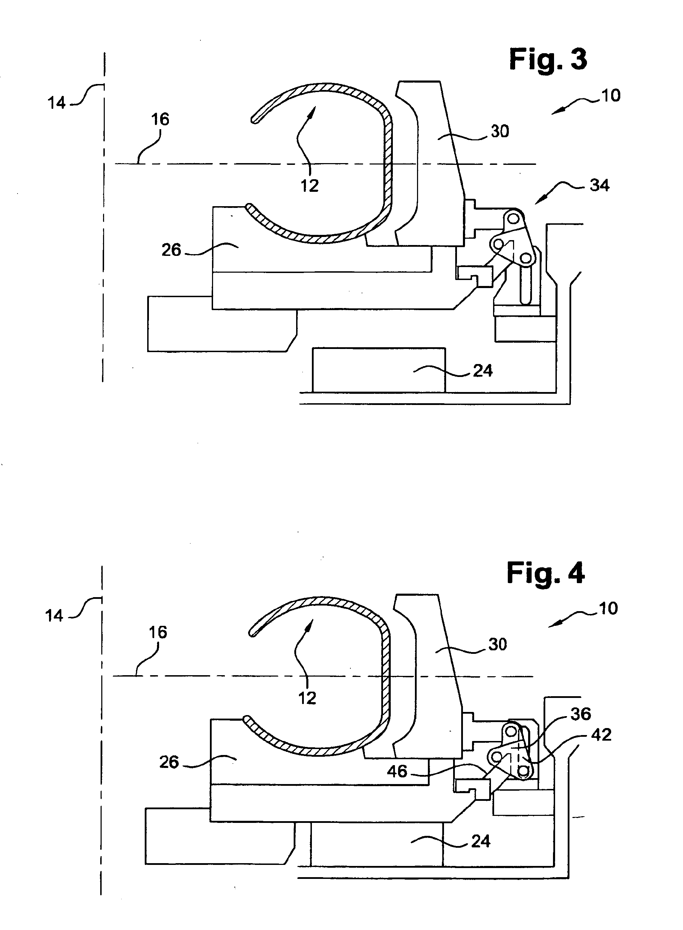

L'axe 38 se déplace selon un mouvement sensiblement uniquement radial par rapport à la coquille motrice. L'axe 40 se déplace selon un mouvement sensiblement uniquement axial par rapport à la coquille et vient se mettre en butée sur l'extrémité supérieure de la glissière 42. Cela est particulièrement visible sur la figure 3 qui représente le moule 10 dans une configuration dans laquelle la coquille inférieure 26 est très espacée du bâti 24, ce qui a provoqué, par l'intermédiaire des moyens 34 de couplage, un écart entre le pneumatique 12 et le secteur 30 qui est suffisant pour permettre l'extraction du pneumatique 12 du moule 10.

Au cours d'une étape suivante représentée sur la figure 4, la coquille inférieure 26 est redescendue contre le bâti 24. En abaissant ainsi la coquille inférieure 26, le levier 36 coulisse vers le bas dans la glissière 42 de la liaison pivot glissant entre le levier 36 et le bâti 24. La coquille inférieure 26 peut ainsi redescendre sans pour autant que les secteurs 30 ne se referment.

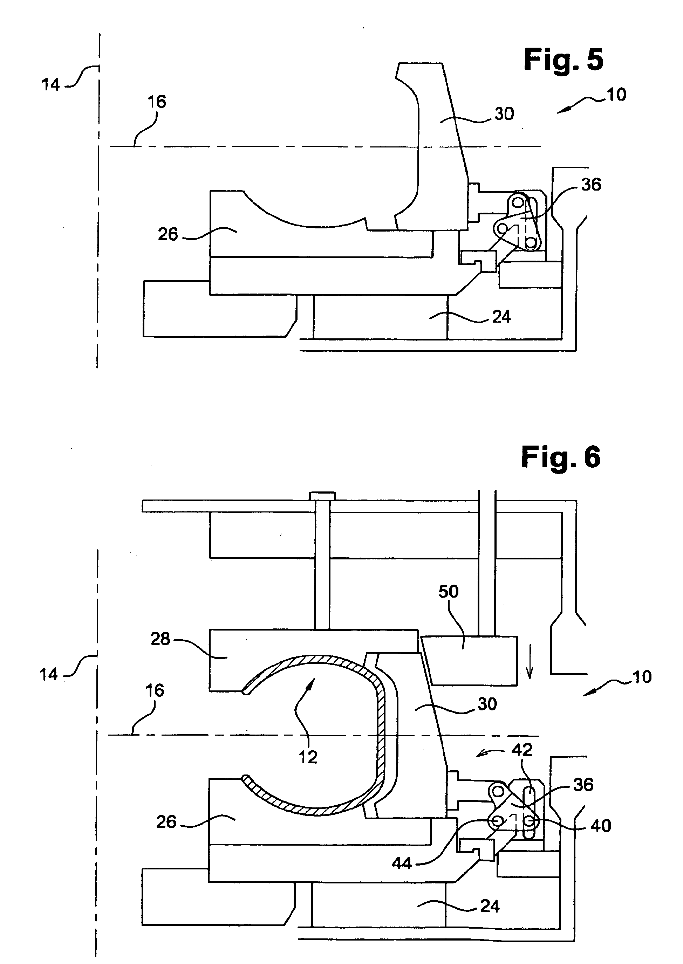

Le moule 10 occupe alors une configuration ouverte au repos représentée sur la figure 4 dans laquelle la coquille inférieure 26 est en position basse et les segments 30 sont ouverts. Dans cette configuration, il est possible d'extraire le pneumatique 12 du moule qui est alors vide comme représenté sur la figure 5.

Au cours d'une étape suivante, on place une nouvelle ébauche de pneumatique 12 à l'intérieur du moule ouvert, puis on le referme en abaissant la coquille supérieure 28 jusqu'à ce quelle vienne en contact contre les segments 30 qui sont encore en position ouverte comme représenté sur la figure 6.

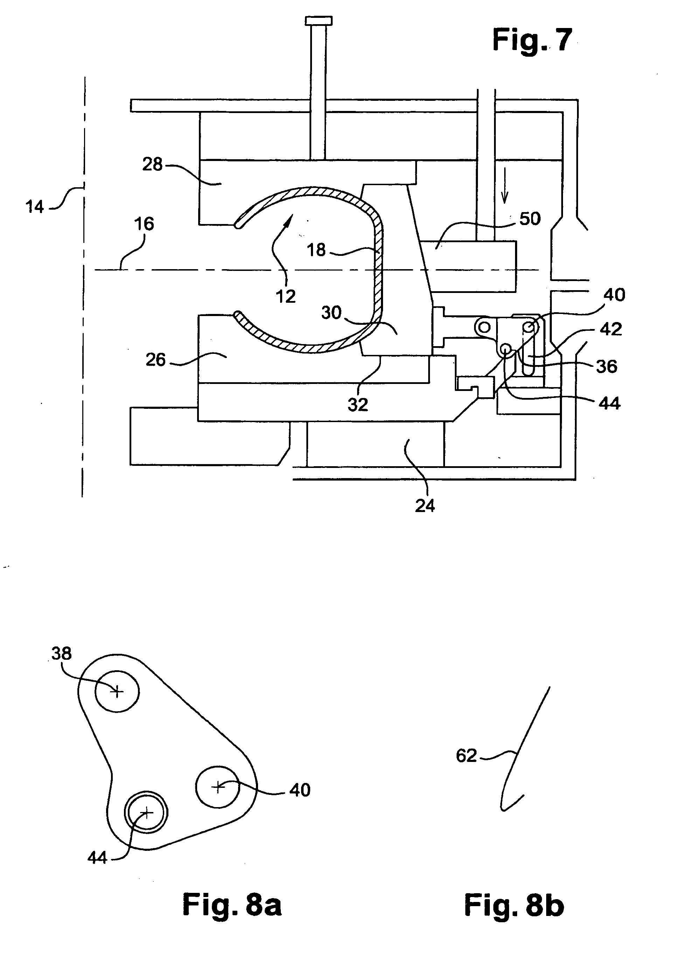

Puis, comme représenté sur la figure 7, on agit sur la couronne de fermeture 50 pour la faire descendre et glisser contre la surface arrière du secteur 30. Ce glissement provoque la fermeture des secteurs 30 vers l'axe du moule jusqu'à ce qu'ils viennent au contact de la bande de roulement du pneumatique 12, c'est-à-dire jusqu'à ce qu'ils occupent leur position fermée de moulage.

Lors de cette étape de fermeture des segments 30, le levier 36 pivote sensiblement autour de l'axe 44 grâce au coulissement de l'axe 40 dans la glissière 42 jusqu'à venir occuper la position initiale représentée indifféremment sur les figures 1 et 7.

La cinématique qui vient d'être décrite montre que, lors de l'ouverture du moule, le secteur 30, sous l'effet du levier 36, glisse sur la coquille inférieure 26 selon la surface de glissement 32.

Pour que la composante axiale de mouvement entre la coquille 26 et le secteur 30 soit sensiblement nulle, il est nécessaire que, au cours de la rotation du levier 36 autour de l'axe 40, l'axe 38 se déplace, par rapport à la coquille inférieure 26 selon une direction uniquement radiale. Toutefois, comme il a été dit plus haut, la disposition des axes 38, 44, 40 les uns par rapport aux autres sur le levier 36 détermine la trajectoire à imposer au pivot mobile 44.

Les figures 8 à 10 montrent chacune :
a) une disposition particulière des axes 38, 40 et 44 sur le levier 36,
b) la trajectoire 62 suivie par l'axe 44 par rapport à un référentiel lié à la coquille inférieure 26.

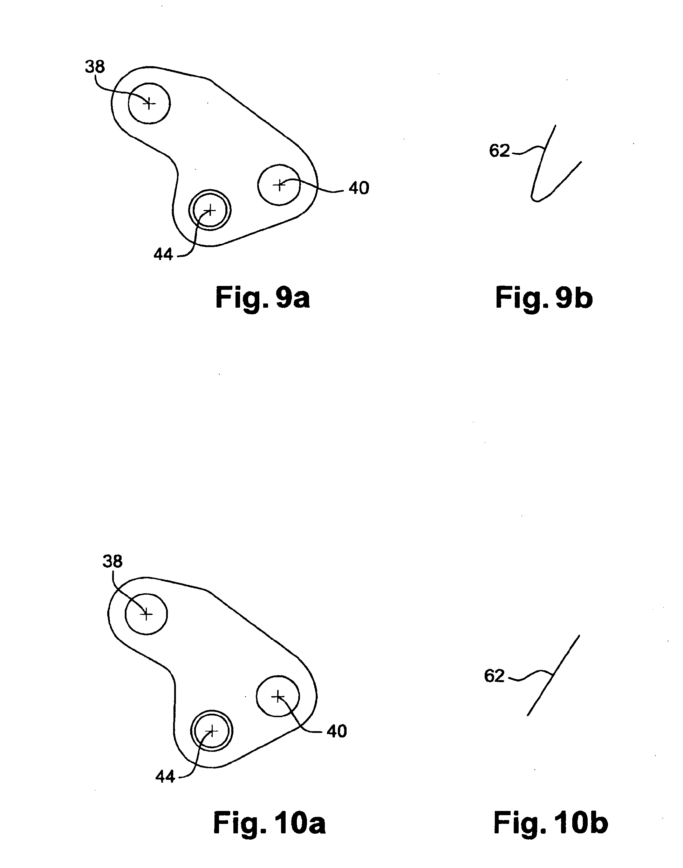

Sur la figure 8, l'angle au sommet 44 du levier 36 est d'environ 82°. Sur la figure 9, l'angle au sommet 44 du levier 36 est d'environ 98°. Sur la figure 10, cet angle au sommet est de 90°, c'est-à-dire que le triangle formé par les axes 38, 40 et 44 sur le levier 36 est rectangle.

On constate alors que la trajectoire 62 de l'axe 44 est rectiligne uniquement lorsque le triangle formé par les trois axes de liaison du levier 36 est rectangle. En effet, la glissière 42 guidant l'axe 40 selon la direction axiale et l'angle au sommet 44 étant rectangle, le mouvement de l'axe 38 est, sous l'effet de la rampe 46, sensiblement radial.

En d'autres termes, si la liaison entre le levier 36 et la coquille inférieure 26 est une liaison formant un pivot mobile selon la direction de la trajectoire rectiligne 62, on est assuré que la trajectoire de l'axe 38 par rapport à la coquille inférieure 26 est rectiligne et sensiblement radiale. On constate par ailleurs que cette direction de glissement forme, avec la direction axiale de translation de la coquille inférieure 26, un angle égal à l'angle du sommet du triangle par lequel passe l'axe 38. La forme rectiligne de la rampe 46 et l'angle formé par la rampe 46 de glissement avec la direction axiale 14 sont donc identiques respectivement à la forme de la trajectoire 62 et à l'angle formé par la trajectoire 62 avec la direction axiale 14.

La direction de glissement de l'axe 44 forme avec la direction axiale 14 un angle égal à l'angle au sommet du triangle par lequel passe l'axe 38 de la liaison pivot entre le levier 36 et le secteur 30.

Si l'on souhaite utiliser un levier dont la forme triangulaire n'est pas rectangle tout en conservant un mouvement radial entre le levier et le secteur 30, il est alors nécessaire de prévoir une liaison entre le levier et la coquille inférieure 26 adaptée pour assurer une trajectoire courbe telle que la trajectoire 62 représentée sur les figures 8b et 9b. Une telle liaison est bien entendu plus complexe à réaliser et pourra consister à modifier la rampe 46 et/ou la glissière 42, par exemple sous la forme d'une rampe et/ou d'une glissière non rectiligne.

L'invention n'est pas limitée au mode de réalisation qui vient d'être décrit.

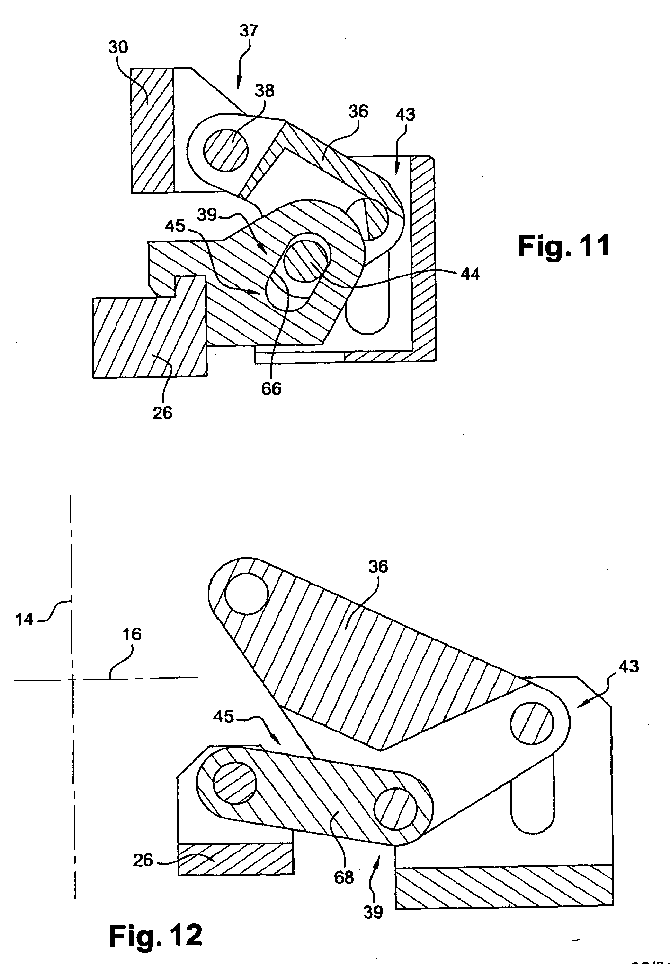

En effet, selon une première variante représentée sur la figure 11, l'axe 44 de la liaison pivot mobile glisse, non pas sur une rampe 46, mais dans une glissière 66. Dans cette première variante, les moyens de couplage 34 et la glissière 66 sont agencés de sorte que, le déplacement axial de la coquille inférieure 26 par rapport au bâti 24 provoque un déplacement de l'axe 38 sensiblement uniquement radial par rapport à la coquille 26.

Selon une autre variante représentée sur la figure 12, les moyens 43 de liaison du levier 36 à la coquille motrice 26 et les moyens de guidage 45 comprennent une biellette 68 reliée respectivement au levier 36 et à la coquille motrice 26 par des liaisons pivots respectivement 64, formant le pivot mobile, et 65, dont les axes sont orthogonaux aux directions axiale et radiale 14 et 16. Les axes 38, 40 et 64 sont agencés sur le levier 36 aux sommets d'un triangle rectangle. L'axe 64 des moyens de liaison 43 du levier 36 à la coquille 26 passe par le sommet à angle droit du triangle rectangle. La distance entre les axes 64 et 65 de la biellette est sensiblement égale à la distance séparant les axes 64 et 40 sur le levier. Ainsi, le mouvement axial de la coquille motrice 26 impose au pivot mobile 64 des mouvements de rotation autour de l'axe 65 par rapport à la coquille et autour de l'axe 40 par rapport au bâti, lesquels, combinés à un mouvement de translation axial de l'axe 40 par rapport à la coquille 26 provoquent un mouvement de l'axe 64 sensiblement rectiligne. Dans cette deuxième variante, la biellette 68 est agencée de sorte que, lors du déplacement axial de la coquille motrice 26 par rapport au bâti 24, le mouvement de l'axe 38 par rapport à la coquille motrice 26 soit sensiblement uniquement radial. Ainsi, on pourra faire varier les caractéristiques géométriques de la biellette, par exemple la longueur de la biellette 68 et la position des axes 64, 65.

## Revendications

1. Moule (10) de vulcanisation pour pneumatique (12), le pneumatique (12) ayant une forme générale torique, sensiblement symétrique autour d'un axe (14), **caractérisé en ce qu'**il comprend :
- un bâti (24),
- deux coquilles latérales (26, 28) décalées axialement l'une de l'autre et montées mobiles en translation axiale par rapport au bâti (24),
- une pluralité de secteurs (30) répartis circonférentiellement en bordure des coquilles (26, 28) et disposés axialement entre les deux coquilles (26, 28), les secteurs (30) étant montés mobiles en translation radiale par rapport aux coquilles (26, 28),
- des moyens (34) de couplage des secteurs (30) à l'une des deux coquilles (26) dite coquille motrice (26), comprenant un levier (36), des moyens de liaison (37) du levier (36) au secteur (30) comprenant une liaison pivot d'axe (38) orthogonal aux directions axiales (14) et radiales (16) définies par le moule (10), des moyens de liaison (43) du levier (36) à la coquille motrice (26) comprenant une liaison pivot d'axe (44) orthogonal aux directions axiales et radiales définies par le moule (10),
- des moyens (45) de guidage de l'axe (44) des moyens de liaison (43) du secteur (30) à la coquille motrice (26),
les moyens de couplage (34) et les moyens de guidage (45) étant agencés de sorte que le déplacement axial de la coquille motrice (26) par rapport au bâti (24) provoque un déplacement de l'axe (38) des moyens de liaison (37) du levier (36) au secteur (30) sensiblement uniquement radial par rapport à la coquille motrice (26).

2. Moule (10) selon la revendication 1, dans lequel la liaison pivot d'axe (38) des moyens de liaison (37) du levier (36) au secteur (30) relie un dos du secteur (30) au levier (36).

3. Moule selon la revendication 1 ou 2, dans lequel la direction axiale (14) est sensiblement verticale et la coquille motrice (26) est la coquille inférieure.

4. Moule (10) selon l'une quelconque des revendications précédentes, dans lequel les moyens (34) de couplage sont agencés de manière à induire entre la coquille motrice (26) et chaque secteur (30), un mouvement dont la composante axiale est sensiblement nulle.

5. Moule (10) selon l'une quelconque des revendications précédentes, dans lequel les moyens de couplage (34) comprennent des moyens (39) de liaison du levier (36) au bâti (24) comprenant une liaison pivot d'axe (40) orthogonal aux directions axiales et radiales définies par le moule (10).

6. Moule (10) selon la revendication précédente, dans lequel les axes (38, 44, 40) des moyens de liaison (37, 43, 39) du levier au secteur (30), à la coquille motrice (26) et au bâti sont sensiblement parallèles les uns aux autres et agencés sur le levier (36) aux sommets d'un triangle.

7. Moule (10) selon la revendication 5 ou 6, dans lequel les moyens de liaison (39) du levier (36) au bâti (24) comprennent une liaison pivot glissant d'axe (40) monté glissant dans une glissière (42) dont la direction de glissement (42) est sensiblement axiale.

8. Moule (10) selon la revendication 6 ou 7, dans lequel le triangle est rectangle et l'axe (44) des moyens de liaison (43) du levier (36) à la coquille motrice (26) passe par le sommet à angle droit du triangle rectangle.

9. Moule (10) selon l'une quelconque des revendications précédentes, dans lequel les moyens (45) de guidage comprennent une rampe (46) de glissement de l'axe (44) des moyens de liaison (39) du levier (36) à la coquille motrice (26) portée par la coquille motrice (26).

10. Moule (10) selon les revendications 8 et 9 prises ensemble, dans lequel la rampe de glissement (46) est sensiblement rectiligne.

11. Moule (10) selon l'une quelconque des revendications 1 à 8, dans lequel les moyens de guidage (45) comprennent une glissière (42) de glissement de l'axe (44) des moyens de liaison (39) du levier (36) à la coquille motrice (26) ménagée dans la coquille motrice (26).

12. Moule (10) selon l'une quelconque des revendications 1 à 8, dans lequel les moyens de guidage (45) comprennent une biellette (68) reliée respectivement au levier (36) et à la coquille motrice (26) par des liaisons pivots d'axes (64, 65) orthogonaux aux directions axiales (14) et radiales (16) définies par le moule (10).

## Patentansprüche

1. Vulkanisierform (10) für einen Reifen (12), wobei der Reifen (12) eine torusförmige allgemeine Gestalt hat, die im Wesentlichen symmetrisch um eine Achse (14) ist, **dadurch gekennzeichnet, dass** sie aufweist:
- ein Unterteil (24),
- zwei Seitenschalen (26, 28), die axial zueinander versetzt sind und axial translationsbeweglich bezüglich des Unterteils (24) angebracht sind,
- mehrere Segmente (30), die in Umfangsrichtung am Rand der Schalen (26, 28) verteilt sind und axial zwischen den zwei Schalen (26, 28) angeordnet sind, wobei die Segmente (30) radial translationsbeweglich bezüglich der Schalen (26, 28) angebracht sind,
- Mittel (34) zur Kopplung der Segmente (30) mit einer der zwei Schalen (26), die Antriebsschale (26) genannt wird, welche aufweisen: einen Hebel (36), Mittel zur Verbindung (37) des Hebels (36) mit dem Segment (30), die eine Schwenkverbindung mit einer Achse (38) aufweisen, die zu der axialen (14) und der radialen (16) Richtung, die durch die Form (10) definiert sind, orthogonal ist, und Mittel zur Verbindung (43) des Hebels (36) mit der Antriebsschale (26), die eine Schwenkverbindung mit einer Achse (44) aufweisen, die zu der axialen und der radialen Richtung, die durch die Form (10) definiert sind, orthogonal ist,
- Mittel (45) zur Führung der Achse (44) der Mittel zur Verbindung (43) des Segments (30) mit der Antriebsschale (26),
wobei die Kopplungsmittel (34) und die Führungsmittel (45) derart ausgebildet sind, dass die axiale Verschiebung der Antriebsschale (26) bezüglich des Unterteils (24) eine im Wesentlichen ausschließlich radiale Verschiebung der Achse (38) der Mittel zur Verbindung (37) des Hebels (36) mit dem Segment (30) bezüglich der Antriebsschale (26) hervorruft.

2. Form (10) nach Anspruch 1, wobei die Schwenkverbindung mit der Achse (38) der Mittel zur Verbindung (37) des Hebels (36) mit dem Segment (30) einen Rücken des Segments (30) mit dem Hebel (36) verbindet.

3. Form nach Anspruch 1 oder 2, wobei die axiale Richtung (14) im Wesentlichen vertikal ist und die Antriebsschale (26) die untere Schale ist.

4. Form (10) nach einem der vorhergehenden Ansprüche, wobei die Kopplungsmittel (34) dazu ausgebildet sind, zwischen der Antriebsschale (26) und jedem Segment (30) eine Bewegung hervorzurufen, deren axiale Komponente im Wesentlichen null ist.

5. Form (10) nach einem der vorhergehenden Ansprüche, wobei die Kopplungsmittel (34) Mittel (39) zur Verbindung des Hebels (36) mit dem Unterteil (24) aufweisen, die eine Schwenkverbindung mit einer Achse (40) aufweisen, die zu der axialen und der radialen Richtung, die durch die Form (10) definiert sind, orthogonal ist.

6. Form (10) nach dem vorhergehenden Anspruch, wobei die Achsen (38, 44, 40) der Mittel zur Verbindung (37, 43, 39) des Hebels mit dem Segment (30), mit der Antriebsschale (26) und mit dem Unterteil im Wesentlichen parallel zueinander sind und an dem Hebel (36) an den Eckpunkten eines Dreiecks angeordnet sind.

7. Form (10) nach Anspruch 5 oder 6, wobei die Mittel zur Verbindung (39) des Hebels (36) mit dem Unterteil (24) eine gleitende Schwenkverbindung mit einer Achse (40) aufweisen, die in einer Gleitschiene (42) gleitend gelagert ist, deren Gleitrichtung (42) im Wesentlichen axial ist.

8. Form (10) nach Anspruch 6 oder 7, wobei das Dreieck rechtwinklig ist und die Achse (44) der Mittel zur Verbindung (43) des Hebels (36) mit der Antriebsschale (26) durch den Scheitelpunkt des rechten Winkels des rechtwinkligen Dreiecks verläuft.

9. Form (10) nach einem der vorhergehenden Ansprüche, wobei die Führungsmittel (45) eine Gleitrampe (46) für die Achse (44) der Mittel zur Verbindung (39) des Hebels (36) mit der Antriebsschale (26) aufweisen, die von der Antriebsschale (26) getragen wird.

10. Form (10) nach den Ansprüchen 8 und 9 zusammengenommen, wobei die Gleitrampe (46) im Wesentlichen geradlinig ist.

11. Form (10) nach einem der Ansprüche 1 bis 8, wobei die Führungsmittel (45) eine Gleitführung (42) für die Achse (44) der Mittel zur Verbindung (39) des Hebels (36) mit der Antriebsschale (26) aufweisen, die in der Antriebsschale (26) ausgebildet ist.

12. Form (10) nach einem der Ansprüche 1 bis 8, wobei die Führungsmittel (45) einen Schwingarm (68) aufweisen, der mit dem Hebel (36) und mit der Antriebsschale (26) jeweils durch eine Schwenkverbindung mit einer Achse (64, 65) verbunden ist, die zu der axialen (14) und der radialen (16) Richtung, die durch die Form (10) definiert sind, orthogonal ist.

## Claims

1. Vulcanizing mould (10) for a tyre (12), the tyre (12) having a general toric shape, substantially symmetrical about an axis (14), **characterized in that** it comprises:
- a frame (24),
- two lateral shells (26, 28) offset axially relative to each other and mounted so as to be capable of axial translational movement with respect to the frame (24),
- a plurality of segments (30) distributed circumferentially at the edge of the shells (26, 28) and arranged axially between the two shells (26, 28), the segments (30) being mounted so as to be capable of radial translational movement with respect to the shells (26, 28),
- means (34) for coupling the segments (30) to one of the two shells (26), termed the driving shell (26), comprising a lever (36), means (37) for linking the lever (36) to the segment (30) which comprise a pivot link with an axle (38) orthogonal to the axial (14) and radial (16) directions defined by the mould (10), means (43) for linking the lever (36) to the driving shell (26) which comprise a pivot link with an axle (44) orthogonal to the axial and radial directions defined by the mould (10),
- guide means (45) for the axle (44) of the means (43) for linking the segment (30) to the driving shell (26),
- the coupling means (34) and the guide means (45) being arranged such that the axial displacement of the driving shell (26) with respect to the frame (24) causes a displacement of the axle (38) of the means (37) for linking the lever (36) to the segment (30) which is substantially exclusively radial with respect to the driving shell (26).

2. Mould (10) according to Claim 1, in which the pivot link with an axle (38) of the means (37) for linking the lever (36) to the segment (30) connects a back of the segment (30) to the lever (36).

3. Mould according to Claim 1 or 2, in which the axial direction (14) is substantially vertical and the driving shell (26) is the lower shell.

4. Mould (10) according to any one of the preceding claims, in which the coupling means (34) are designed so as to impart a movement with an axial component that is substantially zero between the driving shell (26) and each segment (30).

5. Mould (10) according to any one of the preceding claims, in which the coupling means (34) comprise means (39) for linking the lever (36) to the frame (24) which comprise a pivot link with an axle (40) orthogonal to the axial and radial directions defined by the mould (10).

6. Mould (10) according to the preceding claim, in which the axles (38, 44, 40) of the means (37, 43, 39) for linking the lever to the segment (30), to the driving shell (26) and to the frame are substantially parallel to one another and arranged on the lever (36) at the vertices of a triangle.

7. Mould (10) according to Claim 5 or 6, in which the means (39) for linking the lever (36) to the frame (24) comprise a sliding pivot link with an axle (40) mounted so as to slide in a slideway (42), where the sliding direction (42) is substantially axial.

8. Mould (10) according to Claim 6 or 7, in which the triangle is a right triangle and the axle (44) of the means (43) for linking the lever (36) to the driving shell (26) passes through the right-angled vertex of the right triangle.

9. Mould (10) according to any one of the preceding claims, in which the guide means (45) comprise a slide ramp (46) for the axle (44) of the means (39) for linking the lever (36) to the driving shell (26), which slide ramp (46) is carried by the driving shell (26).

10. Mould (10) according to Claims 8 and 9 taken together, in which the slide ramp (46) is substantially rectilinear.

11. Mould (10) according to any one of Claims 1 to 8, in which the guide means (45) comprise a slideway (42) for the axle (44) of the means (39) for linking the lever (36) to the driving shell (26), which slideway (42) is formed in the driving shell (26).

12. Mould (10) according to any one of Claims 1 to 8, in which the guide means (45) comprise a connecting rod (68) connected respectively to the lever (36) and to the driving shell (26) by pivot links with axles (64, 65) which are orthogonal to the axial (14) and radial (16) directions defined by the mould (10).
